(19) Europäisches Patentamt

European Patent Office

Office européen des brevets

(11) EP 0 848 465 A1

(12) DEMANDE DE BREVET EUROPEEN

(43) Date de publication:
17.06.1998 Bulletin 1998/25

(51) Int Cl.⁶: H01S 3/06

(21) Numéro de dépôt: 97403041.3

(22) Date de dépôt: 15.12.1997

(84) Etats contractants désignés:
AT BE CH DE DK ES FI FR GB GR IE IT LI LU MC NL PT SE
Etats d'extension désignés:
AL LT LV MK RO SI

(30) Priorité: 16.12.1996 FR 9615433

(71) Demandeur: COMMISSARIAT A L'ENERGIE ATOMIQUE
75015 Paris (FR)

(72) Inventeurs:
• Nerin, Philippe
  38170 Seyssinet (FR)
• Robic, Jean-Yves
  38100 Grenoble (FR)
• Marty, Jean
  38180 Seyssins (FR)

(74) Mandataire: Moutard, Pascal Jean
c/o Brevatome,
25, rue de Ponthieu
75008 Paris (FR)

(54) **Microlaser à frequence d'émission moduléé**

(57) L'invention concerne une cavité microlaser comportant :

- un milieu actif solide (2),
- un miroir d'entrée (4),
- un miroir de sortie (6),

- une couche (8) d'un matériau résistif étant formé sur une des faces de la microcavité, cette couche ayant des propriétés optiques de transparence et de réflectivité adaptées à la face de la microcavité sur laquelle elle est déposée.

FIG.1

**Description**

Domaine technique

L'invention se rapporte au domaine des microlasers solides.

Un microlaser présente une structure qui consiste en un empilement de multicouches. Le milieu actif laser est constitué par un matériau de faible épaisseur (comprise par exemple entre 150 et 1000 µm), et de petite dimension (section de l'ordre de quelques mm$^2$), sur lequel des miroirs diélectriques sont directement déposés. Ce milieu actif peut être pompé par une diode laser III-V qui est soit directement hybridée sur le microlaser, soit couplée à ce dernier par fibre optique.

Les microlasers ont de nombreuses applications, dans des domaines aussi variés que l'industrie automobile, l'environnement, l'instrumentation scientifique ou la télémétrie.

Pour une longueur suffisamment courte de la cavité Fabry-Pérot du microlaser, il est possible d'obtenir une seule raie d'émission laser, alors que la structure transverse du faisceau est proche du mode théorique TEM$_{00}$ (le faisceau est circulaire et gaussien).

Les microlasers à fréquence d'émission modulée trouvent des applications dans le domaine de l'analyse chimique de constituants gazeux, de l'analyse des champs de vitesse, de la métrologie sans contact, de l'imagerie laser, ou de l'instrumentation médicale.

On connaît diverses techniques pour accorder, ou moduler, la longueur d'onde d'émission laser.

Selon une première technique, décrite par exemple dans l'article J.J Zayhowski intitulé "Microchip Lasers", paru dans The Lincoln Laboratory Journal, vol. 3, n°3, page 427 et suivantes, 1990, un élément piézoélectrique permet d'appliquer une force transversale sur la structure du microlaser, ce qui engendre une modulation de la fréquence optique de quelques MHz, pour une récurrence de modulation allant du continu à 40 ns. Une telle structure ne se prête pas à une production collective d'un microlaser. Il en résulte un coût de fabrication élevé. De plus, la reproductibilité des performances n'est pas assurée, d'un microlaser à l'autre.

Par ailleurs, cette structure est, en elle-même, complexe : elle nécessite l'association du milieu actif laser et d'un élément ayant des propriétés piézoélectriques.

Une autre technique consiste à introduire dans la cavité microlaser un élément électro-optique : une telle technique est décrite par exemple dans l'article J.J. Zayhowski et al. Intitulé : "Diode pumped composite cavity electro-optically tuned microchip Laser", paru dans IEEE Photonics Technology Letters, vol. 5, n°10, pp. 1153, Octobre 1993. La structure décrite dans ce document nécessite le collage d'un matériau électro-optique sur le milieu actif laser. Des électrodes sont disposées en vis-à-vis selon la direction de l'axe cristallographique C du milieu électro-optique. Une excursion de la fréquence optique de 30 GHz a été observée en appliquant une tension variant de -1000 V à +1000 V sur le cristal électro-optique. Ce type de dispositif présente des difficultés de mise en oeuvre. En particulier, la tension de commande de l'élément électro-optique ajoute un degré de complexité dans l'architecture du composant. Il est difficile de faire cohabiter tous les éléments, pour des problèmes de compatibilité électromagnétique. Enfin, la valeur importante de variation de tension nécessaire au fonctionnement du dispositif nécessite une électronique sophistiquée incompatible avec la simplicité et le bas coût de production du microlaser.

D'autres techniques ont été proposées pour obtenir une modulation de fréquence. Par exemple, une modulation de la fréquence optique peut être obtenue en modulant la puissance du faisceau de pompage : cette technique est décrite dans l'article de J.J. Zayhowski et al. intitulé "Frequency tuning of microchip lasers using pump-power modulation" paru dans IEEE J. Of Quantum Electronics, vol. 28, n° 4, p. 1118, Avril 1992. Le principal inconvénient de ce procédé de modulation provient du fait qu'une modulation d'amplitude accompagne la modulation de fréquence. Cette modulation d'amplitude est indésirable dans la plupart des applications. De plus, l'amplitude du balayage en fréquence est faible, car limitée par la variation de température du cristal amplificateur créée par les variations de la puissance de pompe.

Exposé de l'invention

L'invention a pour objet une structure de microlaser comportant des moyens de modulation en fréquence, et présentant une structure plus simple que les structures connues. En outre, la structure de microlaser selon l'invention présente une efficacité de modulation élevée, et est compatible avec des critères de fabrication collective.

L'invention a plus précisément pour objet une cavité microlaser comportant :

- un milieu actif solide,
- un miroir d'entrée,
- un miroir de sortie,
- une couche d'un matériau résistif étant formé sur une des faces de la microcavité.

Cette couche de matériau résistif a des propriétés optiques de transparence et de réflectivité adaptées à la face de la microcavité sur laquelle elle est déposée.

La couche de matériau résistif permet de réaliser une couche chauffante, qui, par conduction thermique, dilate le matériau laser, et modifie son indice de réfraction. La variation du chemin optique de la cavité Fabry-Pérot entraîne un changement de la fréquence d'émission du laser. Cet effet permet de réaliser une modulation de la fréquence d'émission.

Dans le dispositif selon l'invention, les propriétés thermo-optiques du milieu laser sont donc utilisées pour générer une modulation de fréquence. Par rapport à une modulation à l'aide d'un faisceau de pompage, il est possible de générer des variations de température importantes dans le cristal laser, en jouant sur le courant injecté dans la couche résistive, sans faire varier de manière importante l'amplitude ou la puissance d'émission du faisceau émis par le faisceau laser.

Cette structure permet de réaliser des efficacités de modulation plus élevées. De plus, elle est compatible avec un procédé de réalisation collectif : en particulier, aussi bien les miroirs que l'élément chauffant (résistif) peuvent être déposés collectivement, en couches minces.

Le matériau résistif peut être de l'ITO (Oxyde d'indium dopé à l'étain), ou de l'oxyde d'indium, ou de l'oxyde d'étain dopé à l'antimoine ou au fluor, ou de l'oxyde de zinc dopé à l'aluminium, ou au gallium, ou à l'indium. D'une manière générale, les matériaux susceptibles de pouvoir être utilisés sont des oxydes métalliques.

La couche résistive peut être déposée entre un des deux miroirs et le milieu actif laser : ceci permet d'avoir un couplage thermique optimal avec le milieu laser.

De préférence, des électrodes métalliques sont déposées latéralement sur la couche résistive : ceci permet d'obtenir un chauffage uniforme de la face chauffante.

Afin d'améliorer l'efficacité de la modulation, des moyens peuvent être prévus pour faciliter l'extraction de la chaleur qui est engendrée dans le milieu actif par la couche de matériau résistif lorsque celle-ci est parcourue par un courant.

Ces moyens peuvent comporter un élément pouvant être thermostaté, situé en contact avec la face du microlaser qui est opposée à la face sur laquelle la couche de matériau résistif est formée, ou bien en contact avec une (ou plusieurs) face(s) latérale(s) du microlaser.

Des moyens peuvent en outre être prévus pour stabiliser la fréquence d'émission laser vis-à-vis d'éventuelles dérives thermiques.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un premier mode de réalisation de l'invention,
- la figure 2 représente un deuxième mode de réalisation de l'invention,
- les figures 3 et 4 représentent deux autres modes de réalisation de l'invention, avec élément thermostaté,
- la figure 5 est une représentation schématique pour la modélisation d'un microlaser modulé thermiquement,
- les figures 6A et 6B représentent l'évolution en fréquence de l'amplitude et de la phase de la modulation en température du milieu amplificateur d'un microlaser selon l'invention,
- la figure 7 représente un microlaser stabilisé en température,
- les figures 8A à 8D illustrent des étapes d'un procédé de réalisation d'un dispositif selon l'invention.

Description détaillée de modes de réalisation de l'invention

Dans les différents modes de réalisation de l'invention, le matériau constitutif du milieu actif laser peut être dopé au néodyme (Nd) pour une émission laser autour de 1,06 $\mu$m. Ce matériau peut être choisi, par exemple, parmi l'un des matériaux suivants : YAG ($Y_3Al_5O_{12}$), LMA ($LaMgAl_{11}O_{19}$), $YVO_4$, YSO ($Y_2SiO_5$), YLF ($YLiF_4$) ou $GdVO_4$, etc.

Pour des émissions à d'autres longueurs d'ondes on choisira des matériaux et des dopants différents. En général, les ions actifs sont choisis parmi :

- Nd pour une émission autour de 1,06 $\mu$m,
- Er ou un codopage erbium-ytterbium Er+Yb pour une émission autour de 1,5 $\mu$m,
- Tm ou Ho ou un codopage de thulium et d'holmium pour une émission autour de 2 $\mu$m.

Par ailleurs, de l'épaisseur $\underline{e}$ du milieu actif dépendent certaines caractéristiques du microlaser :

- d'une part, l'absorption du faisceau pompe est d'autant plus forte que l'épaisseur e est grande ; en effet, si $I_o$ est l'intensité de la pompe incidente sur la face d'entrée, et "a" le coefficient d'absorption, l'intensité absorbée sur l'épaisseur $\underline{e}$ sera donnée par :

$$I \text{ absorbée} = Io(I-e^{-ae}),$$

- d'autre part, le nombre de modes longitudinaux d'une cavité Fabry-Pérot augmente avec l'épaisseur et, si on veut réaliser un laser monomode longitudinal, cette épaisseur doit être de préférence faible. En effet, dans une cavité Fabry-Pérot plan-plan d'épaisseur e, l'intervalle spectral libre dv entre deux modes Fabry-Pérot est donné par :

$$dv=c/2e$$

avec c : vitesse de la lumière.

Si dg est la largeur de la bande de gain (d'émission laser) du matériau, le nombre de modes N sera donné par :

$$N = dg/dv$$

On voit que, pour un matériau donné (a et dg donnés), quand e augmente, l'absorption de la pompe augmente mais N augmente également. Pour un laser monofréquence, on choisit en général l'épaisseur minimum pour N=1. Les épaisseurs typiques pour obtenir un seul mode sont :

- YAG L = 750 µm,
- $YVO_4$ L = 500 µm,
- LMA L = 150 µm.

En pratique l'épaisseur $\underline{e}$ varie donc par exemple entre 100 µm et 1 mm.

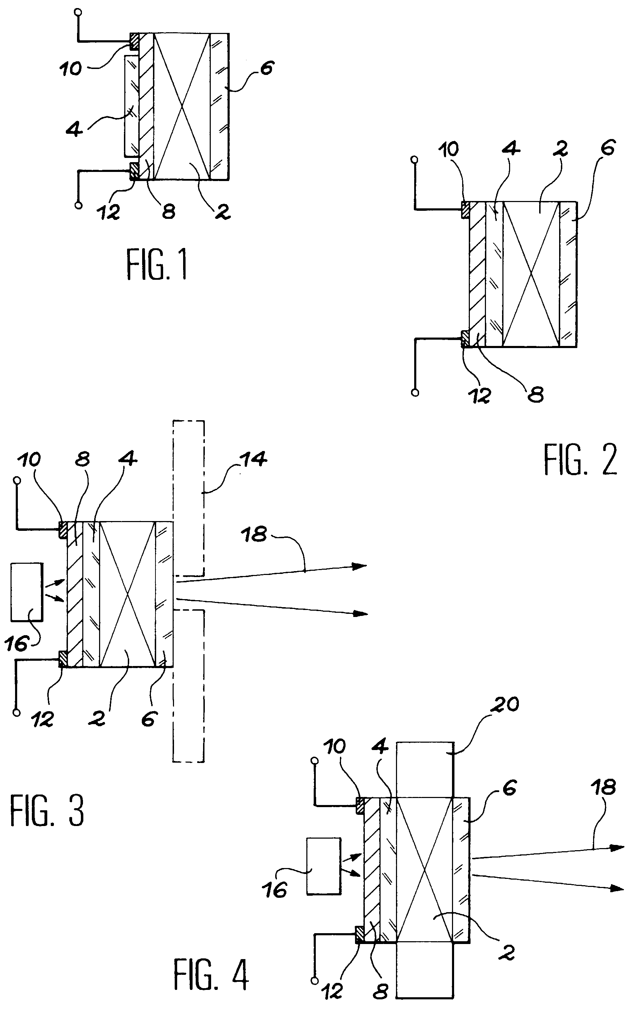

La figure 1 représente un premier mode de réalisation de l'invention. La référence 2 désigne le milieu actif du microlaser. Celui-ci est compris entre deux miroirs 4 et 6 qui ferment la cavité microlaser (cavité Fabry-Pérot).

Une couche 8 de matériau résistif est déposée directement sur le milieu amplificateur : le contact direct entre la couche résistive et le milieu amplificateur permet d'avoir un couplage thermique optimal. Des électrodes métalliques de contact 10, 12 sont déposées sur cette couche résistive. Si ces électrodes sont déposées latéralement, un chauffage uniforme de la face chauffante est assuré. Un ensemble de couches diélectriques est ensuite déposé sur la couche résistive 8, pour former le miroir 4.

Le matériau constitutif de la couche 8 est un matériau conducteur, présentant des propriétés optiques adaptées à la face du microlaser sur laquelle il est déposé. Ainsi, si la couche 8 est déposée du côté du microlaser par lequel rentre le faisceau de pompage, cette couche sera transparente, c'est-à-dire présentera un certain degré de transparence, au faisceau de pompage. En outre, elle peut être transparente à la longueur d'onde du laser. Si elle est déposée de l'autre côté, cette couche sera transparente, c'est-à-dire présentera un certain degré de transparence au moins à la longueur d'onde d'émission du laser.

Les matériaux susceptibles de remplir ces conditions sont pour la majorité des oxydes, dont les plus courants sont l'oxyde d'indium, l'oxyde d'indium dopé à l'étain (ITO), l'oxyde d'étain dopé à l'antimoine ou au fluor, l'oxyde de zinc dopé à l'aluminium, ou au gallium, ou à l'indium. Dans le cas de l'ITO, des résistances globales de plusieurs centaines d'ohms sont possibles. Ainsi, pour des courants relativement faibles (quelques milliampères) il est possible de générer sur une face du microlaser des puissances thermiques de plusieurs centaines de milliwatts. Ces puissances thermiques relativement élevées permettent de réaliser aisément une modulation en fréquence du microlaser.

Par exemple, la résistivité de l'ITO est typiquement comprise entre $5.10^{-4}$ et $2.10^{-3}$ $\Omega$.m. En appelant $R_0$ le rapport de la résistivité à l'épaisseur de la couche, la gamme de variation de $R_0$ est de 50 à 400 $\Omega$ par carré. Dans ces conditions, les pertes optiques s'élèvent à 2% à 1064 nm (et 1% à 800 nm). Pour $\rho=5.10^{-4}$ $\Omega$.cm et pour une épaisseur de couche de 50 nm, $R_0= 100$ $\Omega$. Si la longueur est égale à la largeur (ex : puces microlasers de 1x1mm$^2$), alors la résistance de la couche est bien de 100 $\Omega$. Avec une alimentation sous 10 Volts, la puissance dégagée est alors de 1 Watt.

Une élévation de quelques degrés du milieu actif permet en général d'obtenir une variation de quelques GHz de la fréquence d'émission du laser. La valeur précise du rapport $\Delta v/\Delta T$ (variation de fréquence/variation de température) dépend des dimensions du résonateur et du matériau amplificateur. Ainsi, pour un microlaser Nd:YAG ou Nd:YVO$_4$

(de longueur de cavité 500 µm), on a sensiblement : $\Delta v/\Delta T \cong 3$ GHz/°C. En faisant passer un courant I dans la couche résistive 8, un échauffement est produit par effet Joule sur une face du microlaser, entraînant une élévation de la température du miroir. La diffusivité thermique dans les matériaux laser étant en général bonne, le milieu actif subit une élévation de température correspondante. En créant une variation de la température moyenne du cristal laser, une modulation dynamique de la fréquence du laser peut donc être obtenue. On peut, par exemple, maintenir un miroir à la température $T_1$ (par exemple le miroir 6 de la figure 1), et moduler la température du second miroir (miroir 4 sur la figure 1) selon une loi du type :

$$(1) \qquad T_2(t) = T_2 + \Delta T \cos(2\pi f_m t) \ .$$

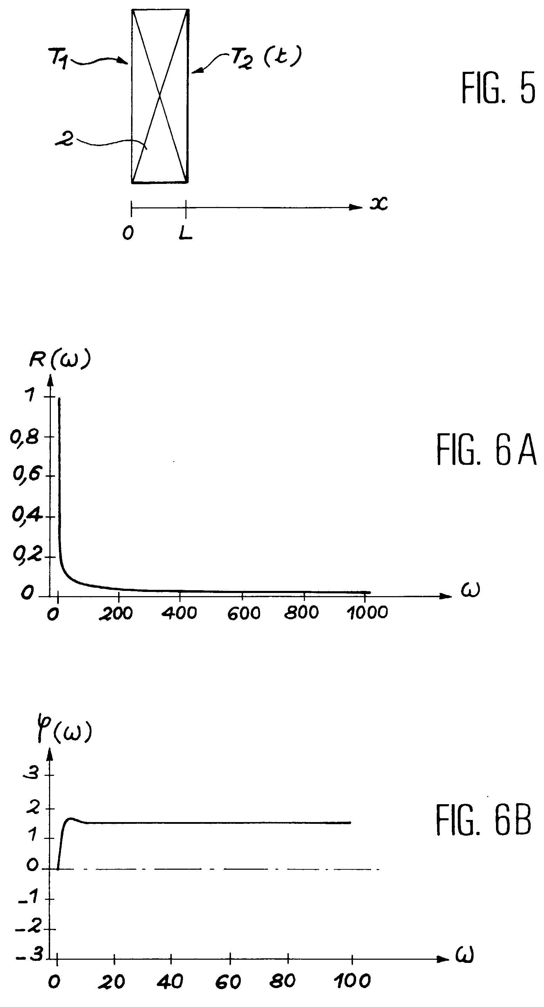

Il est possible de modéliser la réponse d'un cristal laser à une modulation thermique de ce type. Cette modélisation va être expliquée en liaison avec la figure 5. Sur cette figure, l'abscisse de chaque élément est repérée sur un axe Ox, sensiblement parallèle à l'axe de la cavité du microlaser. La face maintenue à la température $T_1$ se trouve à l'abscisse $X=0$, tandis que la face se situant en abscisse $x=L$ se voit appliquer la modulation $T_2(t)$ donnée ci-dessus. La température $T(x,t)$ à l'intérieur du milieu actif laser 2, en un point d'abscisse $X$ et à l'instant $t$ est déterminée par l'équation de la chaleur, et les conditions aux limites suivantes :

$$(2) \quad \begin{cases} \dfrac{\partial^2 T}{\partial t} \; = \; \dfrac{1}{a^2} \, \dfrac{\partial T}{\partial t} \\[2mm] T(x \; = \; 0; \; t) \; = \; T_1 \\[2mm] T(x \; = \; L; \; t) \; = \; T_2 \; + \; \Delta T \cos{(2\pi f t)} \end{cases}$$

Afin de résoudre ce problème aux limites, on utilise le principe de superposition. On scinde le problème en trois sous-problèmes :

- un premier sous-problème dans lequel une des faces est maintenue à la température $T_1$ et l'autre face à la température 0,
- un second sous-problème dans lequel l'une des faces est maintenue à la température 0 et l'autre face à la température $T_2$,
- un troisième sous-problème dans lequel une des faces est maintenue à la température 0 et l'autre face se voit appliquer une modulation $\Delta T \cos(2\pi f t)$.

A chacun de ces sous-problèmes correspond un groupe d'équations. La résolution de (2) se ramène donc à la résolution de (P1), (P2), (P3) :

$$(P1) \quad \begin{cases} \dfrac{\partial^2 T_1}{\partial x^2} \; = \; \dfrac{1}{a^2} \, \dfrac{\partial T_1}{\partial t} \\[2mm] T_1(x \; = \; 0; \; t) \; = \; T_1 \\[2mm] T_1(x \; = \; L; \; t) \; = \; 0 \end{cases}$$

$$(P2) \quad \begin{cases} \dfrac{\partial^2 T_2}{\partial x^2} = \dfrac{1}{a^2} \dfrac{\partial T_2}{\partial t} \\[2mm] T_2(x = 0; t) = 0 \\[2mm] T_2(x = L; t) = T_2 \end{cases}$$

$$(P3) \quad \begin{cases} \dfrac{\partial^2 T_3}{\partial x^2} = \dfrac{1}{a^2} \dfrac{\partial T_3}{\partial t} \\[2mm] T_3(x = 0; t) = 0 \\[2mm] T_3(x = L; t) = \Delta T \cos(2\pi f t) \end{cases}$$

On vérifie que la solution du problème s'écrit :

$$T(x,t) = T_1(x,t) + T_2(x,t) + T_3(x,t)$$

où les trois solutions élémentaires s'écrivent :

$$T_1(x,t) = T_1(1 - x/L)$$

$$T_2(x,t) = T_2 x/L$$

$$T_3(x, t) = \Delta T . \mathrm{Re}\left[ \frac{\sin\left(\dfrac{x}{a}\sqrt{i\omega}\right)}{\sin\left(\dfrac{L}{a}\sqrt{i\omega}\right)} e^{-\omega t} \right]$$

On peut calculer la température moyenne du cristal :

$$\overline{T(\omega, t)} = \frac{1}{r_m L} \int_0^L T(x, t) . r_m . dx = \frac{T_1 + T_2}{2} + \frac{\Delta T}{2} \mathrm{Re}\left[ 2. \frac{1 - \cos\left(\dfrac{L}{a}\sqrt{i\omega}\right)}{\left(\dfrac{L}{a}\right).\sqrt{i\omega}. \sin\left(\dfrac{L}{a}\sqrt{i\omega}\right)} . \mathrm{Exp}(-i\omega t) \right]$$

que l'on peut écrire sous la forme condensée :

$$T(\omega, t) = T_0 + \frac{\Delta T}{2} R(\omega) \cos\left[\omega. t + \varphi(\omega)\right] ,$$

en utilisant les notations suivantes :

$$* \; T_0 = \frac{T_1 + T_2}{2}$$

$$* \; a^2 = \frac{K}{\rho C}$$

où K représente la conductivité thermique du milieu 2 laser, $\rho$ sa densité et C sa chaleur spécifique.

$$* \; R(\omega) = \text{Module}\left[ 2. \frac{1 - \cos\left(\frac{L}{a}\sqrt{i\omega}\right)}{\left(\frac{L}{a}\right)\sqrt{i\omega} . \sin\left(\frac{L}{a}\sqrt{i\omega}\right)} \right]$$

$$* \; \varphi(\omega) = \text{Arg}\left[ 2. \frac{1 - \cos\left(\frac{L}{a}\sqrt{i\omega}\right)}{\left(\frac{L}{a}\right)\sqrt{i\omega} . \sin\left(\frac{L}{a}\sqrt{i\omega}\right)} \right]$$

Les figures 6A et 6B représentent l'évolution de $R(\omega)$ et $\varphi(\omega)$ en fonction de $\omega/2\pi$, pour un cristal laser YAG:Nd avec L=500 µm. En appelant

$$\omega_0 = \left(\frac{a}{L}\right)^2$$

la pseudo-fréquence de coupure, on vérifie les comportements asymptotiques suivants :

$$R(\omega << \omega_0) = 1$$

$$\varphi(\omega << \omega_0) = 0$$

$$R(\omega >> \omega_0) << 1$$

$$\varphi(\omega >> \omega_0) = \frac{\pi}{2}$$

Pour $\omega<<\omega_0$ l'élévation de la température moyenne du milieu actif 2 est donc égale à l'élévation de la température $\Delta T$ du miroir chauffant. De plus, la température moyenne du cristal est en phase avec l'excitation.

Le comportement pour $\omega>>\omega_0$ montre que l'élévation de température moyenne du milieu actif 2 décroît rapidement lorsque $\omega$ dépasse $\omega_0$.

La fréquence d'émission laser s'écrit :

$$\nu(\omega,t) = \nu(T_0) + \Delta\nu(\Delta T,\omega,t)$$

Seul le terme $\Delta\nu(\Delta T,\omega,t)$ présente un intérêt pour les applications à la modulation en fréquence, et peut s'écrire :

$$\Delta v\left(\Delta T, \omega, t\right) \;=\; -v_0\!\left[\alpha_e \;+\; \frac{1}{n}\,\frac{\partial n}{\partial T}\right]\!.\,\frac{\Delta T}{2}\,R(\omega)\cos\!\left[\omega t \;+\; \varphi(w)\right]$$

A la fréquence nulle ω=0, la formule ci-dessus donne $\Delta v/\Delta T$=3,2 GHz/°C$^{-1}$, ce qui est en accord avec les résultats expérimentaux. La fonction $R(\omega)$ est à décroissance rapide, ce qui indique que pour obtenir une amplitude de modulation $\Delta v$ significative à haute fréquence, on crée une variation de température $\Delta T$ élevée. L'invention permet de résoudre ce problème : en déposant, en couche mince, un matériau résistif sur une face du laser on peut, en faisant passer un courant dans la couche résistive, créer la variation de température $\Delta T$ permettant d'obtenir aisément une modulation de la fréquence d'émission laser pour des fréquences de modulation de l'ordre du kilohertz.

Selon un autre mode de réalisation, illustré sur la figure 2, la couche résistive 8 est déposée sur le miroir 4, du côté par lequel rentre, par exemple, le faisceau de pompage du milieu actif laser. Là encore, les propriétés optiques de la couche 8 seront adaptées en fonction de la face sur laquelle elle est déposée.

Lorsque la couche 8 est déposée directement (cas de la figure 1) sur le matériau 2, l'épaisseur de la couche 8 (par exemple en ITO, d'épaisseur égale à un multiple entier de $\lambda/4$) et son indice de réfraction ($\approx$1,8) influent sur les caractéristiques du miroir multicouches 4, et notamment sur sa réflectivité, pour obtenir un fonctionnement optimal du microlaser.

Lorsque la couche 8 est déposée sur le filtre multicouches 4 (cas de la figure 2), l'épaisseur de la couche 8, ainsi que son indice de réfraction, influent peu sur le fonctionnement du filtre car ce sont les premières couches en contact avec le matériau laser qui figent le profil spectral des filtres multicouches 4 et 6. Dans ces conditions la formule du multicouche, avec ou sans la couche 8, est sensiblement la même.

Deux autres modes de réalisation sont illustrés sur les figures 3 et 4. Sur ces figures, des références numériques identiques à celles des figures 1 et 2 y désignent des éléments similaires où correspondants.

En outre, le dispositif de la figure 3 comporte un élément pouvant être thermostaté, par exemple à une température $T_1$ constante. Cet élément peut par exemple être un radiateur de cuivre ou bien un élément à effet Peltier ou bien tout autre échangeur thermique/thermoélectrique.

Cet élément thermostaté permet d'extraire la chaleur générée dans le microlaser, du fait de l'augmentation de la température lors de la circulation du courant dans la couche résistive 8. L'extraction de chaleur peut aussi être réalisée en utilisant les faces latérales du microlaser : sur la figure 4, la référence 20 désigne l'élément thermostaté.

Sur les figures 3 et 4, les références 16 et 18 désignent respectivement une diode de pompage du milieu actif laser et un faisceau laser émis par le microlaser.

Quel que soit le mode de réalisation envisagé, le dispositif selon l'invention permet de réaliser une modulation de la longueur d'onde d'émission du microlaser, avec une efficacité de modulation importante, de l'ordre de quelques GHz. En outre, le dispositif réalisé est simple, et compatible avec un mode de réalisation collectif. Le composant obtenu est robuste, car monolithique.

On peut obtenir des récurrences de modulation élevée, de l'ordre de quelques millisecondes.

Enfin, une telle structure a un coût de fabrication faible.

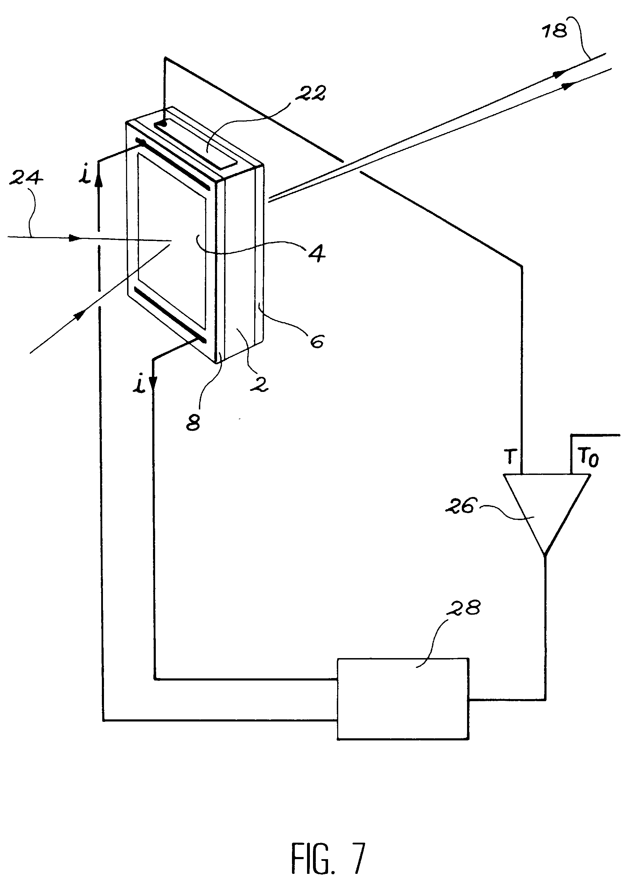

Une autre application possible de la présente invention concerne la possibilité de stabiliser la fréquence d'émission laser vis-à-vis des dérives thermiques. Dans ce cas, comme illustré sur la figure 7, une sonde de température 22 (thermistance) et un asservissement sont rajoutés au montage. Le système d'asservissement comporte par exemple un comparateur 26 et un générateur de courant piloté 28. Le comparateur compare la valeur de la température T, mesurée à l'aide de la thermistance 22, à une valeur de consigne $T_0$, et délivre un signal d'erreur $\varepsilon$ :

- si $T<T_0$ : le signal d'erreur $\varepsilon$-est positif et le courant i délivré par le générateur augmente, selon une loi du type i=G (1-$\varepsilon$),
- si $T>T_0$ : le signal d'erreur $\varepsilon$ est négatif et le courant i diminue ; la température du cristal décroît par rayonnement ou conduction si un radiateur ou un élément thermostaté est rajouté.

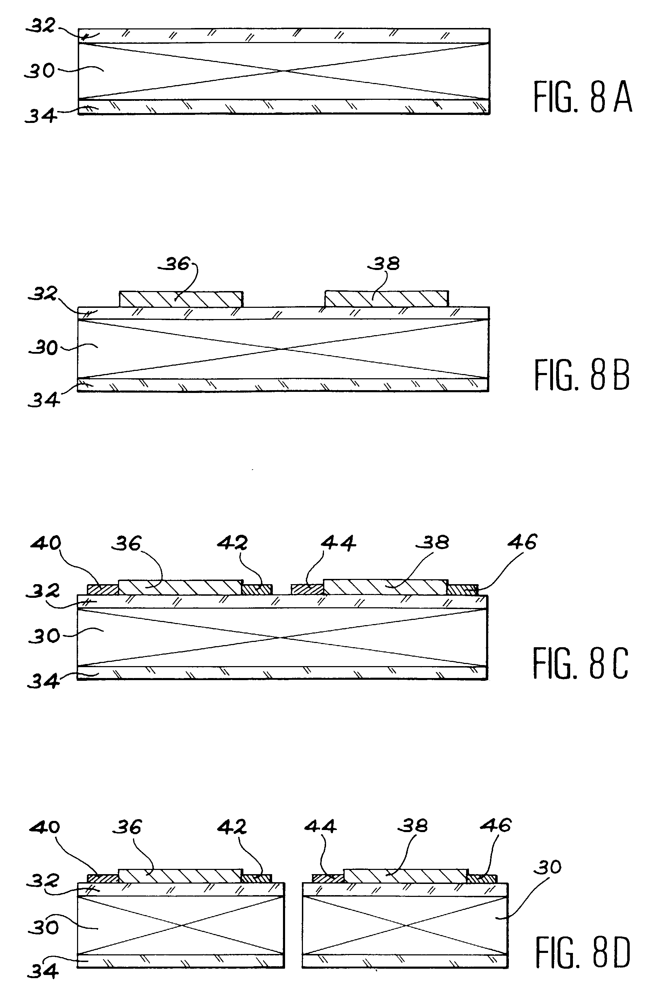

Un procédé de réalisation d'un laser selon l'invention va maintenant être décrit, en liaison avec les figures 8A à 8D.

Une première étape (figure 8A) consiste à choisir le matériau actif laser, à l'orienter et à le découper en lames 30, d'épaisseur comprise entre par exemple quelques centaines de micromètres et quelques millimètres. Ces lames sont ensuite rodées et polies.

On dépose ensuite les couches 32, 34 de miroirs d'entrée et de sortie. Il s'agit par exemple de miroirs dichroïques, obtenus par un dépôt de multicouches diélectriques.

Ensuite (figure 8B) on dépose, par exemple sur la couche 32, une couche d'un matériau résistif ayant les propriétés de transparence adaptées. La technique de dépôt peut être par exemple la pulvérisation (sputtering), ou l'évaporation réactive ou l'évaporation avec assistance ionique (ion assisted deposition, IAD). Puis, par masquage mécanique et gravure par "lift-off", on grave cette couche de façon à déterminer des zones 36, 38 adaptées à des microlasers individuels.

Dans une troisième étape (figure 8C) on réalise des prises de contact 40, 42, 44, 46 pour chaque couche résistive 36, 38.

La dernière étape (figure 8D) est une étape de découpe des cavités microlasers individuelles. Chaque cavité comporte alors un milieu actif laser, ses miroirs d'entrée et de sortie, une couche résistive et ses plots de contact.

L'ensemble peut ensuite être couplé à une diode de pompage directement hybridée sur la cavité microlaser ou reliée à celle-ci par une fibre optique.

**Revendications**

1. Cavité microlaser comportant :

   - un milieu actif solide (2),
   - un miroir d'entrée (4),
   - un miroir de sortie (6),
   - une couche (8) d'un matériau résistif étant formé sur une des faces de la microcavité, cette couche ayant des propriétés optiques de transparence et/ou de réflectivité adaptées à la face de la microcavité sur laquelle elle est déposée.

2. Cavité microlaser selon la revendication 1, le matériau résistif étant de l'ITO, ou de l'oxyde d'indium, ou de l'oxyde d'étain dopé à l'antimoine ou au fluor, ou de l'oxyde de zinc dopé à l'aluminium, au gallium ou à l'indium.

3. Cavité microlaser selon la revendication 1 ou 2, la couche résistive (8) étant déposée entre un des deux miroirs (4, 6) et le milieu actif laser (2).

4. Cavité microlaser selon l'une des revendications 1 à 3, des électrodes métalliques (10, 12) étant déposées latéralement sur la couche résistive.

5. Cavité microlaser selon l'une des revendication 1 à 4, comportant en outre des moyens (14, 20) pour faciliter l'extraction de la chaleur qui est engendrée dans le milieu actif (2) par la couche de matériau résistif (8) lorsque celle-ci est parcourue par un courant.

6. Cavité microlaser selon la revendication 5, les moyens pour faciliter l'extraction de la chaleur comportant un élément (14, 20) pouvant être thermostaté, situé en contact avec la face du microlaser opposée à celle sur laquelle la couche de matériau résistif (8) est formée, ou bien en contact avec une face latérale du microlaser.

7. Cavité microlaser selon l'une des revendications 1 à 6, comportant en outre des moyens (22, 26, 28) pour stabiliser la fréquence d'émission laser vis-à-vis des dérives thermiques.

8. Cavités microlaser selon l'une des revendications 1 à 6, comportant en outre une sonde (22) de température du milieu actif laser et des moyens d'asservissement (28) d'un courant à faire circuler dans la couche (8) de matériau résistif.

FIG. 1

FIG. 2

FIG. 3

FIG. 4

FIG. 5

FIG. 6 A

FIG. 6B

FIG. 7

FIG. 8 A

FIG. 8 B

FIG. 8 C

FIG. 8 D

**Office européen des brevets**

## RAPPORT DE RECHERCHE EUROPEENNE

Numéro de la demande

EP 97 40 3041

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 571 051 A (MASSACHUSETTS INST TECHNOLOGY) 24 novembre 1993 * colonne 3, ligne 31 - ligne 42 * --- | 1 | H01S3/06 |
| A | DE 42 44 689 A (DEUTSCHE AEROSPACE) 13 janvier 1994 * abrégé; figure 1A * ----- | 1 | |

| DOMAINES TECHNIQUES RECHERCHES (Int.Cl.6) |
|---|
| H01S |

Le présent rapport a été établi pour toutes les revendications

| Lieu de la recherche | Date d'achèvement de la recherche | Examinateur |
|---|---|---|
| LA HAYE | 2 avril 1998 | Galanti, M |